# EUROPEAN PATENT SPECIFICATION

(11) **EP 2 801 400 B1**
(45) Date of publication and mention of the grant of the patent: **01.05.2024**
(21) Application number: 14167570.2
(22) Date of filing: 08.05.2014
(51) Int. Cl.: B01D 67/00, B01D 69/12, B01D 39/16

(54) **Biocide-loaded electrospun nanofibers supported by adhesive-free thin fabric for pathogen removal filtration**
Biozidgeladene elektrogesponnene Nanofasern mit klebstofffreiem dünnem Gewebe für Filtration zur Entfernung von Krankheitserregern
Nano-fibres électrofilées à charge biocide supportée par un tissu mince sans adhésif pour filtration d'élimination d'agents pathogènes

(30) Priority: 10.05.2013 US 201313891743
(43) Date of publication of application: 12.11.2014
(73) Proprietor: Goodrich Corporation, Charlotte, North Carolina 28217 (US)
(72) Inventor: Hu, Jin, Hudson Village, OH 44236 (US)
(74) Representative: Dehns

(56) References cited:
- EP-A1- 2 392 395
- WO-A1-2011/142726
- WO-A2-2010/028017
- WO-A2-2013/013241
- GB-A- 2 263 883
- US-A1- 2005 132 682
- US-A1- 2007 175 196
- US-A1- 2009 026 137

## Description

### BACKGROUND OF THE INVENTION

In an aircraft, a potable water system is generally used to supply cabin outlet facilities (e.g., handwash basins in lavatories and sinks in onboard kitchens) with fresh water. Such a potable water system may use a water filter media (e.g., a pathogen-retaining filter media) combined with biocides-containing nanofiber fabrics to kill pathogens contained in the water or air (see US patent application US2011/0297609 A1).

However, when the potable water system uses biocides-containing nanofiber fabrics bound via adhesive layers to the filter media for disinfestation, it has been found that the incorporation of the nanofiber fabrics and the adhesive layers, no matter how thin they are, usually causes a significant drop in water flow rate and an increased water pressure drop. Thus, there is a need for the development of a new type of filtration system that can be used in a potable water system in the aviation field. It is desired that such a filtration system offers efficient disinfection effects while achieving a low pressure drop and a high flow rate when in use.

WO 2013/013241 A1 discloses a nanofiber liquid filtration medium featuring an electrospun polymeric nanofiber layer.

EP2392395 discloses a filter media comprising a microorganism-killing membrane (e.g. electrospun polymer with nanosilber coating) and a microorganism-capturing membrane.

### SUMMARY OF THE INVENTION

According to the first aspect, a filter media is provided according to claim 1.

In one embodiment, the biocides are biocidal nano-particles (such as, silver nanoparticles). In a separate embodiment, the electrospun nanofiber fabrics are thermoplastic fabrics, which can be polyurethane fabrics including high temperature polyurethane elastomeric fabrics, cellulose acetates fabrics, or polyamides fabrics, or a combination thereof.

In certain instances, the spunbonded nonwoven polymeric fabrics are polyester fabrics, such as, Reemay^{®} spunbonded straight polyester nonwoven fabrics (e.g., Reemay^{®} 2004 and Reemay^{®} 2250).

Another aspect of the invention provides a water-purification cartridge that contains the filter media of the invention.

The invention also provides a portable water system containing the water-purification cartridge the invention.

When in use, the filter media according to the invention offers advantages, such as, high water flow rate and low water pressure drop. The filter media is also highly efficient in achieving good disinfection effects. Thus, the filter media of the invention can be used as an add-on component to dirt/chemical filter cartridge concurrently used in aircraft potable water systems to meet requirements of disinfection without slowing down water flow rate and increasing water pressure drop.

### BRIEF DESCRIPTION OF THE DRAWINGS

Certain preferred embodiments will now be described in greater detail by way of example only and with reference to the accompanying drawings, in which:
FIG. 1 shows a process of producing a N/R layered-structure (or film) by electrospinning nanofiber fabrics onto Reemay^{®} spundbonded nonwoven fabrics;
FIGs. 2-1 and 2-2 demonstrate processes of producing a N/R/P layered-structure: 2-1) illustrates a process of making a N/R/P layered-structure by thermally laminating a N/R film on pathogen-retaining media; and 2-2) illustrates a process of making a N/R/P layered-structure by thermally bonding a N/R film on pathogen-retaining media, where the Reemay^{®} spundbonded nonwoven fabrics are prebonded to pathogen-retaining media; the resulting assemble in both cases is caped from both sides with Reemay^{®} spundbonded nonwoven fabrics for protection;
FIG. 3 demonstrates a reference process of making a N/R/N/R layered-structure by thermally laminating two N/R films, and the resulting assemble is capped with Reemay^{®} spundbonded nonwoven fabrics on top for protection;
FIG. 4 shows a process of producing a D/R/N/R/P N/R layered-structure by thermally laminating a N/R film with dirt/chemical-holding filter media and pathogen-retaining filter media via Reemay^{®} spundbonded nonwoven fabrics, and the resulting assemble is capped with Reemay^{®} spundbonded nonwoven fabrics on top for protection;
FIG. 5 shows a structure having multiple-turn rolls of biocidal N/R fabrics incorporated with inward of a dirt/chemical retaining filter cartridge; and
FIG. 6 shows a structure having multiple-turn rolls of biocidal N/R fabrics incorporated outward of a dirt/chemical retaining filter cartridge.

### DETAILED DESCRIPTION OF THE INVENTION

Electrospun nanofiber fabrics containing biocide(s) can be bound to pathogen-retaining water filter media such as NanoCeram-PAC^{™} media to kill pathogens it contacts (see US 2011/0297609). However, there is a challenge to bind nanofiber fabrics to filter media without using adhesive pastes or layers. When used, adhesive pastes or layers can block nanofiber pores and biocidal sites, or bring in chemical contaminants from the adhesives into water systems.

The invention relates to the use of biocides-loaded electrospun nonwoven polymeric nanofiber fabrics, which are thermally bound onto pathogen-retaining filter media via a thermal binder, for providing filter media with enhanced pathogen killing efficacy for a potable water system. Additionally, a filter media comprising multiple nanofiber fabrics bound together to provide pathogen killing efficacy is disclosed herein. It is contemplated that the electrospun nonwoven polymeric nanofiber fabrics are very thin fabrics.

Accordingly, the invention provides filter media comprising a microorganism-killing membrane. The microorganism-killing membrane includes electrospun nanofiber fabrics that are pre-loaded with biocides. In certain embodiments, the biocides are biocidal nano-particles. According to the invention, the filter media does not contain an adhesive layer or adhesive pastes.

The term "biocide" used herein refers to a chemical substance or microorganism which can deter, render harmless, or exert a controlling effect on any harmful organism by chemical or biological means. Biocides can be added to liquids to protect them against biological infestation and growth.

According to a preferred embodiment of the invention, the biocides can be various biocidal chemicals. All known biocidal chemicals that can be physically retained in the fibers or chemically bound to fibers can be used in the invention, which include biocidal nanoparticles, biocide additives, or materials made of biocide polymers. Exemplified biocidal chemicals are, but not limited to, sodium dichloro-s-triazinetrione (dihydrate or anhydrous; "dichlor"), trichloro-s-triazinetrione ("trichlor"), halogenated hydantoin compounds, quaternary ammonium compounds, copper and its alloys (e.g., brasses, bronzes, cupronickel, copper-nickel-zinc, etc.), and silver and its derivatives.

In one embodiment of the invention, the biocides are in the form of nanoparticles. The invention, in a preferred embodiment, also contemplates the use of chemical precursors that can be converted to nanoparticles.

In accordance with certain embodiments of the invention, the biocides are pre-loaded into electrospun nanofiber fabrics. The biocidal nano-particles can be, for example, silver nanoparticles, or silica nanoparticles chemically bound with silane quaternary amine. In an embodiment, the biocidal nano-particles used herein are silver nanoparticles.

In a separate embodiment, the biocides used herein are chemical precursors, such as, silver nitrate. Although a water soluble chemical, silver nitrate can be converted to silver nano-particles upon a thermal reduction/decomposition or through photoreduction. Such a conversion can be performed *in situ.*

According to a preferred embodiment of the invention, electrospun nanofiber fabrics can be thermoplastic fabrics, including such as, polyurethane fabrics (e.g., high temperature polyurethane elastomeric fabrics), cellulose acetates fabrics, and polyamides fabrics, or a combination thereof. In one embodiment, the electrospun nanofiber fabrics are high temperature polyurethane elastomeric fabrics The thermal binder of the invention is spunbonded nonwoven polymeric fabrics. Various spunbonded nonwoven polymeric fabrics can be used, including, such as, polyester fabrics, polypropylene fabrics, polyurethane fabrics, polyimide fabrics, and polyurethane fabrics, or a combination thereof.

For example, the spunbonded nonwoven polymeric fabrics used herein are polyester fabrics. In certain embodiments, the polyester fabrics used herein are straight polyester fabrics. Exemplified spunbonded nonwoven polymeric fabrics that can be used include, for example, Reemay^{®} spunbonded polyester fabrics.

Reemay^{®} spunbonded polyester is a sheet structure of continuous filament polyester fibers that are randomly arranged, highly dispersed, and bonded at the filament junctions. The chemical and thermal properties of Reemay^{®} are essentially those of polyester fiber, and the fibers' spunbonded structure offers a combination of physical properties including, such as, high tensile and tear strength, non-raveling edges, excellent dimensional stability, no media migration, good chemical resistance, and controlled arrestance and permeability. Reemay^{®} fabrics are used in various industries as covers (e.g., garden blankets) or support materials. Reemay^{®} spunbonded polyester fabrics include either straight or crimped polyester fibers which give the fabrics different filtration and other general performance properties. It is believed that crimped fibers offer properties of softness, conformability, and greater porosity, while straight fibers yield stiffness, tighter structure, and finer arrestance.

Examples of Reemay^{®} spunbonded polyester fabrics include, such as, Reemay^{®} spunbonded polyester nonwovens 2004 (or "Reemay^{®} 2004"), and Reemay^{®} spunbonded polyester nonwovens 2250 (or "Reemay^{®} 2250").

According to a preferred embodiment, the filter media may further include dirt holding filter media, or chemical holding filter media, or a combination thereof. The electrospun nanofiber fabrics used herein are loaded with biocidal nano-particles.

In one embodiment, the filter media of the invention further comprises dirt/chemical holding filter media. The microorganism-killing membrane is thermally bound to the dirt/chemical holding filter media at different surfaces.

According to a preferred embodiment, a microorganism-killing membrane (containing biocide-loaded fabrics) can be rolled up by multiple turns on a screen roll, which is then placed inward of a dirt/chemical holding filter media (or cartridge). Alternatively, the microorganism-killing membrane can be rolled up outside of the dirt/chemical holding filter media (or cartridge). The specific design of roll-up forms is dependent upon the water-flow direction in a specific portable water system.

Further, rolled-up biocide-loaded fabrics may contain multiple microorganism-killing membranes. The rolled-up biocide-loaded fabrics can be placed inward of a dirt/chemical holding filter media (or cartridge), or outside of the dirt/chemical holding filter media (or cartridge), depending on the water-flow direction.

A preferred embodiment of the invention also provides a water-purification cartridge containing the filter media of the invention.

Also provided is a portable water system containing the water-purification cartridge of the invention. Generally, a portable water system includes components, such as, a water storage tank, a pump, a supply line, a water-purification device (such as, a water-purification cartridge). For a detailed description on portable water systems and functions thereof, please refer to US 2011/0297609.

A variety of configurations according to preferred embodiments of the invention are presented in the drawings, where nanofiber fabrics are pre-loaded with biocide(s). In these drawings, Reemay^{®} 2250 is provided as an example of spunbonded nonwoven polymeric fabrics used for a thermal binding layer (a thermal binder). In a preferred embodiment, the invention covers the use of other types of spunbonded nonwoven polymeric fabrics as a thermal binding layer and the use of other types of biocides.

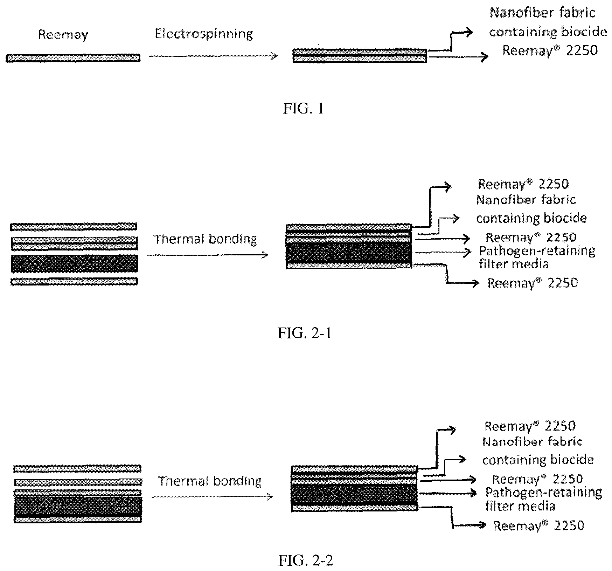

FIG. 1 shows that a layered structure of biocide-containing electrospun nanofibers on Reemay^{®} spundbonded nonwoven fabrics. The layered structure is designated as N/R. The process as demonstrated allows the nanofibers to have better interlock with the Reemay^{®} 2250 fibers, compared to having the Reemay^{®} 2250 pre-laminated on a substrate. In the former case, the nanofibers have a deeper penetration into the large pores of the Reemay^{®} fabrics.

As known in the art, electrospinning generally uses an electrical charge to draw very fine (typically on the micro or nano scale) fibers from a liquid. Electrospinning shares characteristics of both electrospraying and conventional solution dry spinning of fibers (A. Ziabicki, Fundamentals of fiber formation, John Wiley and Sons, London, 1976, ISBN 0-471-98220-2). The process is non-invasive and does not require the use of coagulation chemistry or high temperatures to produce solid threads from solution. Further, electrospinning from molten precursors has also been practiced in this art, which ensures that no solvent can be carried over into the final product.

A system for performing electrospinning generally includes a spinneret that is connected to a high-voltage direct current power supply, a syringe pump, and a grounded collector. Design of an applicable electrospinning process depends upon many factors, including, such as, molecular weight, molecular-weight distribution and architecture (e.g., branched, linear etc.) of the fibers, solution properties (e.g., viscosity, conductivity, and surface tension), electric potential, flow rate and concentration, distance between the capillary and collection screen, ambient parameters (e.g., temperature, humidity and air velocity in the chamber), and motion of target screen (collector) (see, e.g., http://en.wikipedia.org/wiki/Electrospinning).

Son et al. (Macromol. Rapid Commun. 2004, 25, 1632-1637) provides an electrospinning method for preparing of antimicrobial fine fibers with silver nanoparticles. The fine fibers with silver nanoparticles were prepared by direct electrospinning of a cellulose acetate solution containing silver nitrate, followed by photoreduction.

The nanofibers are preloaded with biocides, such as, nanosilver particles or nanosilver particle precursors, e.g., silver nitrate that can be reduced to nanosilvers thermally or by UV. Other biocides that can be used include, such as, nano-silica particles that have been chemically bound with biocide silane quaternary amine.

FIG. 2-1 shows a N/R film thermally bound to pathogen-retaining media, such as, NanoCeram^{®} or NanoCerm-PAC^{™} media. The process allows nanofibers to have a more intimate contact with pathogen-retaining media, as the nanofibers have a deeper penetration into the pores of the spundbonded nonwoven fabrics in the N/R film.

In a situation where nanofiber fabrics require a lower thermal bonding temperature, Reemay^{®} 2250 is first pre-bound to pathogen-retaining media at a higher temperature. A free standing biocide-containing electrospun nanofiber fabrics are then bound to the Reemay^{®} 2250 fabrics. The resulting assemble is then caped with Reemay^{®} 2250 from both sides (FIG. 2-2).

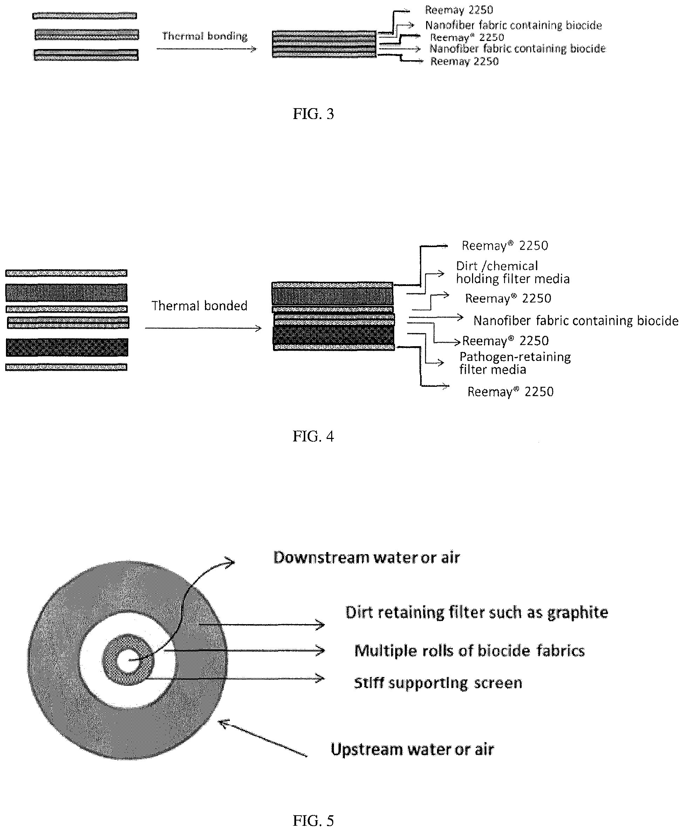

FIG. 3 shows two N/R films thermally bound together. More than two layers of N/R layers can be bound together if a better disinfection and filtration performance is needed. The multiple N/R films can replace the single N/R films in the processes that are shown in the FIGs. 2-1 and 2-2.

FIG. 4 shows a N/R film thermally laminated with dirt/chemical holding filter media and pathogen-retaining filter media via Reemay^{®} fabrics. The assemble is designated as D/R/N/R/P. Incorporation of dirt/chemical media prevents N/R pathogen-killing film and pathogen-retaining media from prematurely losing their efficacy, which is usually caused by surface blockade by dirt or chemicals.

FIG. 5 shows that biocidal nanofiber fabrics (e.g., a N/R film) can be rolled on a stiff screen roll multiple turns to form multiple layers to provide an enhanced pathogen killing efficiency. The biocide fabrics use either very thin nanofibers that are loaded with biocides, so that the total thickness of multiple layers of nanofiber mats is still thin. The use of such a rolled-up structure balances the numbers of turn to avoid causing a significant reduced water flow rate or a significant increased water pressure drop. In this drawing, the water flow direction is outward from the center of the filter media ring.

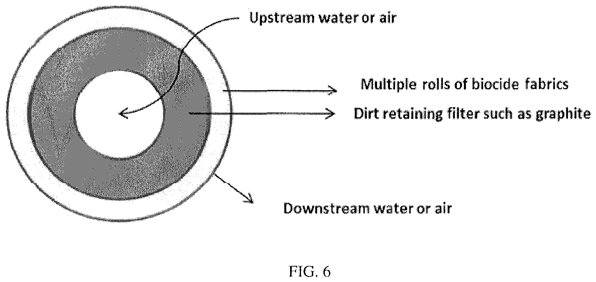

FIG. 6 is very similar to FIG. 5. In this case, the biocidal fabrics are rolled on the dirt and chemical retaining filter ring. The water flow direct direction is inward toward center.

Further, the Reemay^{®} 2250 fabrics can be thermally bound to a membrane or other Reemay^{®} fabrics at a relative low temperature, e.g., 100 - 130 °C with an appropriate pressure. It is appreciated that at such a low temperature, most fabrics or media will not be thermally damaged.

The invention related to a novel use of biocid(s)-loaded nanofiber fabrics that are bound together with a thermal bonding layer to provide disinfection filter media for killing pathogens. By using thin nanofiber fabrics, a high water flow rate and low water pressure drop can be achieved. Further, biocidal nanofiber fabrics can form multiple-layered filter media or be coupled with other filter media membranes, such as NanoCeram-PAC^{™}, to achieve a high flow rate and low pressure drop when in use.

Although the application focuses on a water filtration system, it is believed that the filter media of the invention works equally well for an air filtration system or other types of liquid filtration systems.

Accordingly, the invention provides more efficient disinfection filter media for air or liquid filtration, which offers desired properties, such as, a low pressure drop and a high flow rate when in use. Specifically, thin electrospun nonwoven polymeric nanofiber fabrics of the invention are pre-loaded with biocides, preferably either directly thermally bound onto pathogen-retaining filter media or via a thermal binder onto pathogen-retaining filter media, to provide an enhanced pathogen killing efficacy. Alternatively, filter media containing multiple-rolls of biocide-loaded nanofiber fabrics also provides good pathogen killing properties.

A method of preparing filter media for use in a potable water system or an air filtration system comprises thermally
binding biocid(s)-loaded nanofiber fabrics with a thermal binding layer, further with pathogen-retaining media. The thermal binding step can be conducted through a process including, such as, hot calendaring, belt calendaring, through-air thermal bonding, ultrasonic bonding, radiant-heat bonding, hot laminators, vacuum bagging with heat, and autoclave with pressure and heat, or a combination thereof. Specifically, the thermal binding step of the invention is designed to avoid or minimize melting fibers contained in the nanofiber fabrics and/or the thermal binding layer.

For example, the autoclave method can be performed by a process comprising the following steps:
1). Lay up fabrics and membranes;
2). Bag the fabrics and membranes on a support flat metal;
3). Vacuum the bag;
4). Place the assemble in an autoclave;
5). Apply pressure and heat for a period time;
6). Cool the assemble down to an ambient temperature and release vacuum;
7). Check to ensure that thermal bonding is completed.

As the filter media of the invention does not use adhesives to bind media layers, it avoids the problems associated with the use of adhesives that usually block pores of media and biocide sites, causing low liquid flow rate and high pressure drops in the potable liquid systems.

The scope of the invention is defined by the claims.

## Claims

1. Filter media comprising a microorganism-killing membrane, wherein
a first spunbonded nonwoven polymeric fabric layer is thermally bonded to a first side of a microorganism-killing membrane that comprises electrospun nanofiber fabrics loaded with biocidal agents;
a first side of a second spunbonded nonwoven polymeric fabric layer is bonded to a second side of the microorganism-killing membrane by either electrospinning the microorganism-killing membrane onto the second spunbonded nonwoven polymeric fabric or by thermally bonding the microorganism-killing membrane to the second spunbonded nonwoven polymeric fabric;
a first side of a pathogen-retaining filter medium is thermally laminated to a second side of the second spunbonded nonwoven polymeric fabric layer; and
a third spunbonded nonwoven polymeric fabric layer thermally bonded to a second side of the pathogen-retaining filter medium; and
wherein said filter media does not contain an adhesive layer.

2. The filter media of claim 1, wherein said biocidal agents are silver nanoparticles, or silica nanoparticles chemically bound with silane quaternary amine.

3. The filter media of claim 2, wherein said biocidal silver nanoparticles are formed *in situ* from silver nitrate additives that are thermally reduced or photo-reduced to silver nanoparticles.

4. The filter media of claim 1, 2 or 3, wherein the electrospun nanofiber fabrics are thermoplastic fabrics, and preferably wherein the thermoplastic fabrics are selected from the group of polyurethane fabrics, cellulose acetates fabrics, and polyamides fabrics, or a combination thereof.

5. The filter media of any preceding claim, wherein the spunbonded nonwoven polymeric fabrics comprise straight polyester fabrics.

6. A water-purification cartridge comprising the filter media of any preceding claim.

7. A portable water system comprising the water-purification cartridge of claim 6.

## Patentansprüche

1. Filtermedium, umfassend eine Mikroorganismen abtötende Membran, wobei
eine erste Schicht aus polymerem Spinnvliesstoff thermisch mit einer ersten Seite einer Mikroorganismen abtötenden Membran verbunden ist, die mit bioziden Wirkstoffen geladene elektrogesponnene Nanofasergewebe umfasst;
eine erste Seite einer zweiten Schicht aus polymerem Spinnvliesstoff mit einer zweiten Seite der Mikroorganismen abtötenden Membran entweder durch Elektrospinnen der Mikroorganismen abtötenden Membran auf den zweiten polymeren Spinnvliesstoff oder durch thermisches Verbinden der Mikroorganismen abtötenden Membran mit dem zweiten polymeren Spinnvliesstoff verbunden ist;
eine erste Seite eines Krankheitserreger zurückhaltenden Filtermediums thermisch auf eine zweite Seite der zweiten Schicht aus polymerem Spinnvliesstoff laminiert ist; und
eine dritte Schicht aus polymerem Spinnvliesstoff thermisch mit einer zweiten Seite des Krankheitserreger zurückhaltenden Filtermediums verbunden ist; und
wobei das Filtermedium keine Klebeschicht enthält.

2. Filtermedium nach Anspruch 1, wobei die bioziden Wirkstoffe Silbernanopartikel oder Siliciumdioxidnanopartikel sind, die chemisch an ein quaternäres Silanamin gebunden sind.

3. Filtermedium nach Anspruch 2, wobei die bioziden Silbernanopartikel *in situ* aus Silbernitratzusätzen gebildet sind, die thermisch oder durch Licht zu Silbernanopartikeln reduziert werden.

4. Filtermedium nach Anspruch 1, 2 oder 3, wobei die elektrogesponnenen Nanofasergewebe thermoplastische Gewebe sind und wobei die thermoplastischen Gewebe vorzugsweise aus der Gruppe aus Polyurethangeweben, Celluloseacetatgeweben und Polyamidgeweben oder einer Kombination davon ausgewählt sind.

5. Filtermedium nach einem der vorhergehenden Ansprüche, wobei die polymeren Spinnvliesstoffe gerade Polyesterstoffe umfassen.

6. Wasserreinigungskartusche, umfassend das Filtermedium nach einem der vorhergehenden Ansprüche.

7. Tragbares Wassersystem, umfassend die Wasserreinigungskartusche nach Anspruch 6.

## Revendications

1. Milieu filtrant comprenant une membrane tueuse de micro-organismes, dans lequel
une première couche de tissu polymère non tissé filé-lié est liée thermiquement à un premier côté d'une membrane tueuse de micro-organismes qui comprend des tissus de nanofibres électrofilés chargés d'agents biocides ;
un premier côté d'une deuxième couche de tissu polymère non tissé filé-lié est lié à un second côté de la membrane tueuse de micro-organismes soit par électrofilage de la membrane tueuse de micro-organismes sur le second tissu polymère non tissé filé-lié, soit par liaison thermique de la membrane tueuse de micro-organismes au second tissu polymère non tissé filé-lié ;
un premier côté d'un milieu filtrant retenant les agents pathogènes est laminé thermiquement sur un second côté de la deuxième couche de tissu polymère non tissé filé-lié ; et
une troisième couche de tissu polymère non tissé filé-lié thermiquement liée à un second côté du milieu filtrant retenant les agents pathogènes ; et
dans lequel ledit milieu filtrant ne contient pas de couche adhésive.

2. Milieu filtrant selon la revendication 1, dans lequel lesdits agents biocides sont des nanoparticules d'argent, ou des nanoparticules de silice liées chimiquement avec une amine quaternaire de silane.

3. Milieu filtrant selon la revendication 2, dans lequel lesdites nanoparticules d'argent biocides sont formées *in situ* à partir d'additifs de nitrate d'argent qui sont thermiquement réduits ou photoréduits en nanoparticules d'argent.

4. Milieu filtrant selon la revendication 1, 2 ou 3, dans lequel les tissus de nanofibres électrofilés sont des tissus thermoplastiques, et de préférence dans lequel les tissus thermoplastiques sont choisis dans le groupe des tissus de polyuréthane, des tissus d'acétates de cellulose et des tissus de polyamides, ou une combinaison de ceux-ci.

5. Milieu filtrant selon une quelconque revendication précédente, dans lequel les tissus polymères non tissés filés-liés comprennent des tissus en polyester droits.

6. Cartouche de purification d'eau comprenant le milieu filtrant selon une quelconque revendication précédente.

7. Système d'eau portable comprenant la cartouche de purification d'eau selon la revendication 6.
